# EUROPEAN PATENT APPLICATION

(11) **EP 2 521 388 A1**
(43) Date of publication of application: **07.11.2012**
(21) Application number: 11817761.7
(22) Date of filing: 10.08.2011
(51) Int. Cl.: H04W 12/08

(54) **NETWORK ACCESSING DEVICE AND METHOD FOR MUTUAL AUTHENTICATION THEREBETWEEN**

(30) Priority: 20.08.2010 CN 201010263368
(71) Applicant: ZTE Corporation, Shenzhen, Guangdong 518057 (CN)
(72) Inventor: ZHU, Li, Shenzhen Guangdong518057 (CN)
(74) Representative: Gervasi, Gemma
(86) International application number: PCT/CN2011/078180
(87) International publication number: WO 2012/022234

(57) **Abstract**

A method for a mutual authentication between access network devices and an access network device are disclosed by the present invention. The method includes: configuring a certificate on the access network device; performing a mutual authentication based on the certificate between the access network devices. The present invention realizes the authentication between the access network devices, thus the user data can be transmitted directly.

## Description

### Technical Field

The present invention relates to the communication field, and in particular, to a method for a mutual authentication between access network devices and an access network device.

### Background of the Related Art

The home Node-B (home base station, HNB) is used to provide the wireless coverage of the 3rd generation mobile communication system (3G) for 3G mobile phones in home. The HNB generally includes the access function of the standard 3G macro wireless access network, such as Node B (base station, NB), etc., and the standard radio resource management function, such as Radio Network Controller (RNC), etc.

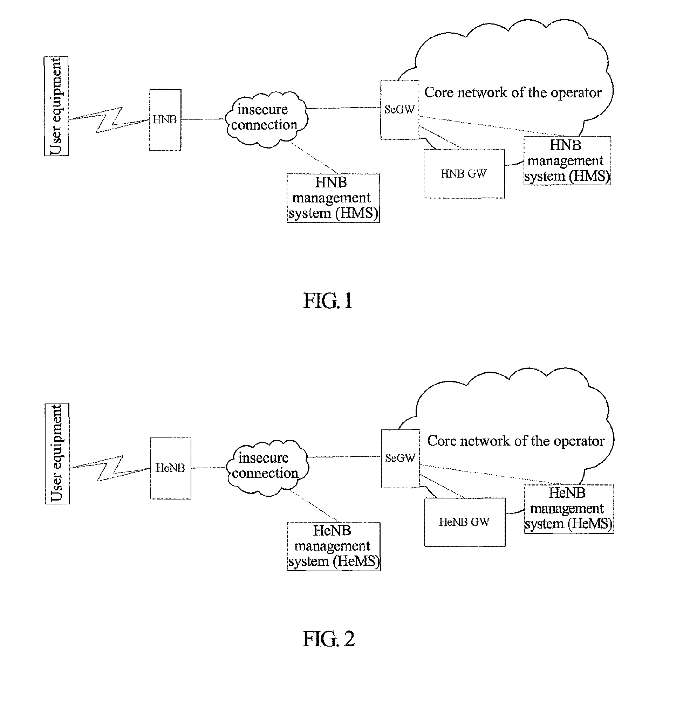

FIG. 1 is a structure diagram of the system of the HNB. As shown in FIG. 1, the HNB accesses the core network of the operator through the Security Gateway (SeGW). The SeGW performs the mutual authentication with the HNB, on behalf of the core network of the operator. The HNB Gateway (HNB GW) and the SeGW are the entities separated logically in the core network of the operator, used for the access control of the user equipment (UE) of the Closed Subscriber Group (CSG).
FIG. 2 is a structure diagram of the system of the HeNB. As shown in FIG. 2, the difference between the Home evolved Node-B (HeNB) and the HNB lies in that: the HeNB is an air interface connecting the user equipment of the 3rd Generation Partnership Project (3GPP) and the Evolved Universal Terrestrial Radio Access Network (EUTRAN). The Home (evolved) Node-B (H(e)NB) includes the HNB and the HeNB, and is the general term of the HNB and the HeNB.

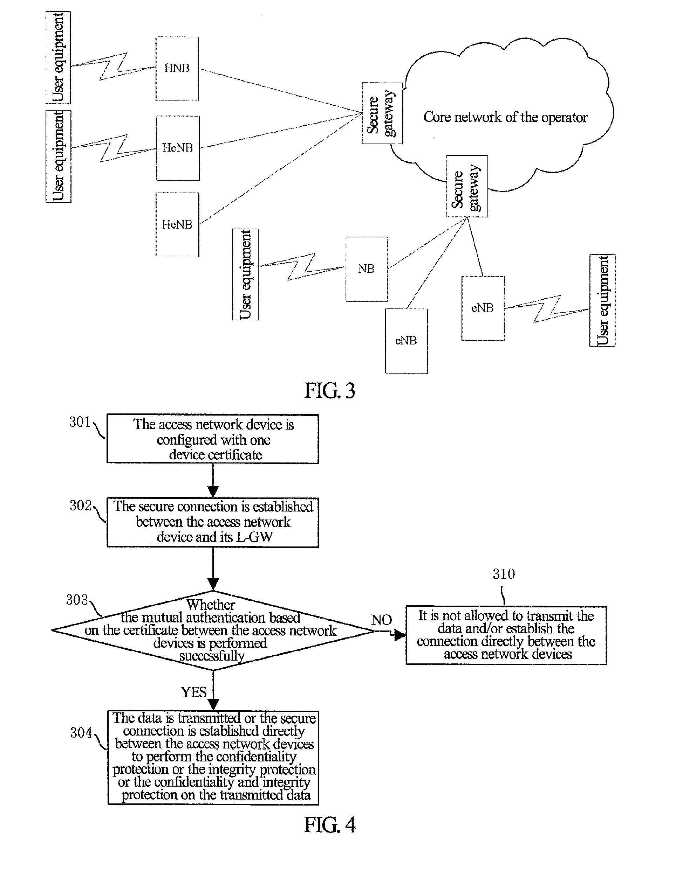

FIG. 3 is a structure diagram of the system when the H(e)NB and (e)NB((evolved) Node-B) coexist in the existing communication network. In the related art, no matter the user data transmission between the H(e)NBs or between the (e)NBs basically needs to be performed through the core network, and since the existing wireless access technology makes the data transmission reach more high speed, the burden of the network becomes heavier. There is no direct interface between the H(e)NB and the H(e)NB in the related art, and there is no direct interface especially between the H(e)NB and the (e)NB, and the X2 interface between the eNB and eNB cannot be used to transmit a large amount of user plane data directly as well. Therefore the operator shows huge demands for lightening the network burden and saving the transmission cost by offloading the network data flow. The Local IP Access (LIPA) and the Selected IP Traffic Offload (SIPTO) enable the user equipment to directly access the devices of other local residents or the company network through the H(e)NB or (e)NB, such as other H(e)NB or (e)NB; thus, it gains more attention by the operator to lighten the network burden and save the transmission cost through offloading the particular data flow of the H(e)NB subsystem and the (e)NB network (such as, the Internet data flow of the H(e)NB subsystem, the Internet data flow of the macro network, and the company data flow, etc.).

In the LIPA and the SIPTO system, since the introduction of the Local Gateway (L-GW), the new security framework and mechanism based on the local gateway is not defined yet; therefore, the security mechanism related to the local gateway needs to be defined to improve the offloading of the data flow.

There is no description for the access process of the H(e)NB or the (e)NB directly accessing other access network devices in the present technical specification yet, and there is also no definition for the authentication procedure and the transmission mode between the devices required by directly transmitting the user data between the access network devices.

### Summary of the Invention

In view of that, the main object of the present invention is to provide a method for a mutual authentication between access network devices and an access network device under one new framework, to solve the problem about how to support the direct data transmission between the access network devices.

In order to solve the above-mentioned problem, the present invention provides a method for a mutual authentication between access network devices, comprising:
configuring a certificate on an access network device; and
performing the mutual authentication based on the certificate between the access network devices.

Before the step of performing the mutual authentication based on the certificate between the access network devices, the method further comprises:
establishing a secure connection between the access network device and a local gateway of the access network device, and/or, establishing a secure connection between the local gateways of the access network devices.

In the method of the present invention, the secure connection between the access network device and the local gateway of the access network device refers to that the access network device is directly connected to the local gateway of the access network device through the secure connection; or, the secure connection between the access network device and the local gateway of the access network device refers to that the access network device is securely connected to the local gateway of the access network device through other network devices.

In the method of the present invention, the secure connection comprises an Internet Protocol Security (IPsec) channel and/or a transport layer security (TLS) channel.

The method further comprises:
after the mutual authentication between the access network devices succeeds, directly transmitting data between the access network devices or performing a confidentiality protection and/or an integrity protection on the transmitted data through an established secure connection.

In the method of the present invention, the access network device comprises one or more of a home base station, a home evolved base station, a base station and an evolved base station.

Before the step of performing the mutual authentication based on the certificate between the access network devices, the method further comprises: performing an integrity check of the device, and performing the mutual authentication only when the check is passed.

In order to solve the above-mentioned problem, the present invention further provides an access network device, configured to:
configure a certificate; and perform the mutual authentication based on the certificate with an access network device of an opposite end.

The access network device of the present invention is further configured to:
establish a connection with the access network device of the opposite end, comprising: establishing an insecure connection or a secure connection between the access network device and a local gateway of the access network device, establishing an insecure connection or a secure connection between the local gateway of the access network device and the local gateway device of the access network device of the opposite end and establishing an insecure connection or a secure connection between the local gateway of the access network device of the opposite end and the access network device.

The access network device is configured to establish the insecure connection or the secure connection with the local gateway of the access network device according to the following way: directly connecting the local gateway of the access network device through the secure connection; or, securely connecting the local gateway of the access network device through other network devices.

In the access network device of the present invention, the secure connection comprises an Internet Protocol Security (IPsec) channel and/or a transport layer security (TLS) channel.

The access network device of the present invention is further configured to: after the mutual authentication between the access network device and the access network device of the opposite end succeeds, directly transmit data with the access network device of the opposite end or perform a confidentiality protection and/or an integrity protection on transmitted data through an established secure connection.

In the access network device of the present invention, the access network device comprises one or more of a home base station, a home evolved base station, a base station and an evolved base station.

The access network device of the present invention is further configured to:
before performing the mutual authentication based on the certificate with the access network device of the opposite end, perform an integrity check of the device, and perform the mutual authentication with the access network device of the opposite end only when the check is passed.

The method for the mutual authentication between the access network devices provided by the present invention realizes the authentication between the access network devices, thus the user data can be directly transmitted.

### Brief Description of Drawings

FIG. 1 is a structure diagram of an HNB system of the related art;
FIG. 2 is a structure diagram of an HeNB system of the related art;
FIG. 3 is a structure diagram of a system when an H(e)NB and an (e)NB coexist in the existing communication network;
FIG. 4 is a flow chart of a mutual authentication mechanism between access network devices according to embodiment one of the present invention;
FIG. 5 is a flow chart of a mutual authentication mechanism between access network devices according to embodiment two of the present invention;
FIG. 6 is a flow chart of a mutual authentication mechanism between access network devices according to embodiment three of the present invention;
FIG. 7 is a flow chart of a mutual authentication mechanism between access network devices according to embodiment four of the present invention;
FIG. 8 is a flow chart of a mutual authentication mechanism between access network devices according to embodiment five of the present invention;
FIG. 9 is a flow chart of a mutual authentication mechanism between access network devices according to embodiment six of the present invention; and
FIG. 10 is a schematic drawing of mutual authentication mechanism between access network devices according to an embodiment of the present invention.

### Preferred Embodiments of the Present Invention

In order to make the object, technical scheme and advantage of the present invention more clear and obvious, the embodiment of the present invention is described in detail with reference to the accompanying drawings hereinafter. It should be illustrated that, in the case of not conflicting, the embodiments in the present application and the features in these embodiments can be combined with each other.

The access network device of the embodiment of the present invention includes the access network elements, such as HNB or HeNB or NB or eNB, etc.

The embodiment of the present invention provides a method for a mutual authentication between access network devices, including:
configuring a certificate (and also called a device certificate) on an access network device; and
performing the mutual authentication based on the certificate between the access network devices.

The method can further include: before performing the mutual authentication, the access network device performing an integrity check of the device, and performing the mutual authentication only when the check is passed.

The method further includes: establishing a secure connection between the access network device and a local gateway (L-GW) of the access network device, and/or, establishing a secure connection between the L-GWs of the access network device.

In the method of the present embodiment, the secure connection between the access network devices is composed of the secure connection between the access network device and the L-GW and the secure connection between the L-GWs; the secure connection is a secure channel which can ensure the transmission security of the data, including an Internet Protocol Security (IPsec) channel and/or a Transport Layer Security (TLS) channel, etc. Wherein, the secure connection between the access network devices relates to a plurality of situations, and one situation is that the connections between the access network device and its local gateway, between the local gateway of the access network device and the local gateway of the access network device of the opposite end, and between the access network device of the opposite end and its local gateway are all secure connections, or, only one section or two sections thereof are secure connections and others are insecure connections, or, all connections are insecure connections.

The method of the present embodiment further includes: after the mutual authentication between the access network devices succeeds, directly transmitting data between the access network devices or performing the confidentiality protection and/or the integrity protection on the transmitted data through an established secure connection.

In the method of the present embodiment, the device certificate configured for the access network device is provided by the Certification Authority (CA) trusted by the operator, and the mutual authentication between the access network devices is supported. For example, the CA can be a CA of the operator, a CA of the manufacturer or supplier of the access network device, or a CA of another party trusted by the operator.

In the method of the present embodiment, the secure connection between the access network device and the L-GW is a direct secure connection, that is, the L-GW directly connects with the access network device through the secure connection;
the secure connection between the access network device and the L-GW also can be an indirect secure connection, that is, the L-GW securely connects with the access network device through other network devices, such as a Serving Gateway (S-GW), etc.

In the method of the present embodiment, the secure connection can be established between the access network device and the L-GW before or after the mutual authentication between the access devices.

Referring to FIG. 4, FIG. 4 is a flow diagram of the mutual authentication mechanism between the access network devices of the present invention, and the flow includes the following steps:

In step 301: the access network device is configured with a device certificate.

The device certificate is provided by the CA trusted by the operator, and the mutual authentication between the access network devices is supported. For example, the CA can be a CA of the operator, a CA of the manufacturer or supplier of the access network device, or a CA of another party trusted by the operator.

In step 302: the secure connection is established between the access network device and its L-GW.

In step 303: the mutual authentication based on the certificate is performed between the access network devices, and if the authentication succeeds, it is to proceed to step 304; otherwise, it is to proceed to step 310.

In practical terms, the mutual authentication based on the certificate between the access network devices can be performed by using the Internet Key Exchange (IKE), and also the mutual authentication based on the certificate between the access network devices can be performed by using the Extensible Authentication Protocol (EAP) or the certificate Transport Protocol or the Security Assertion Markup Language (SAML). Each protocol here is only an example, and will not be limited by the present invention.

In step 304: after the mutual authentication between the access network devices succeeds, the data is transmitted or the secure connection is established directly between the access network devices to perform the confidentiality protection or the integrity protection or the confidentiality and integrity protection on the transmitted data.

In step 310: it is not allowed to transmit the data and/or establish the connection between the access network devices directly. And the flow ends.

The above-mentioned operation procedures might manifest as different procedures as shown in FIG. 4 to FIG. 9 under different application scenarios.

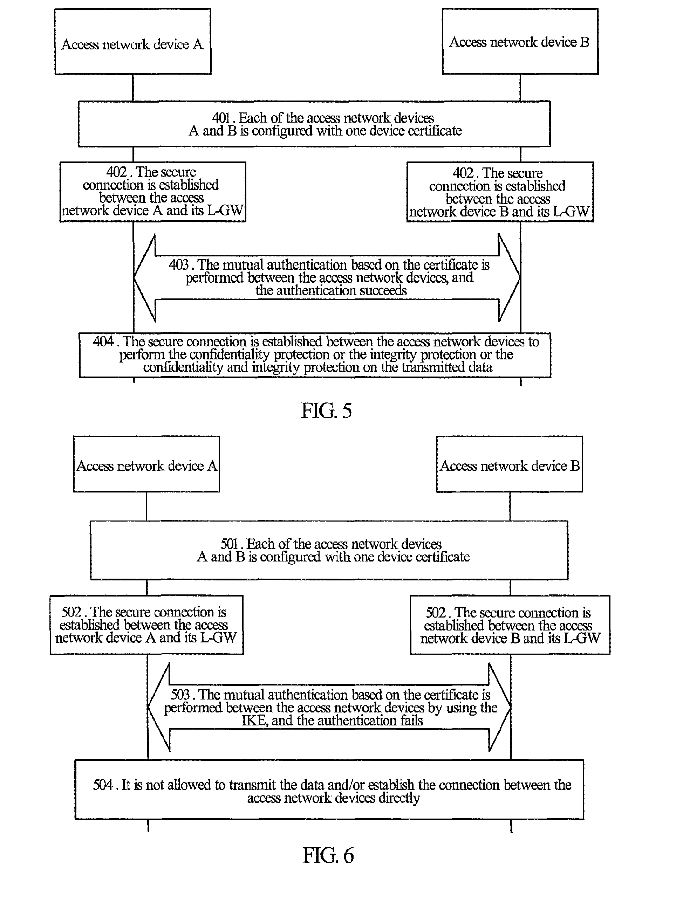

Referring to FIG. 5, FIG. 5 is a flow chart of the mutual authentication mechanism between the access network devices of embodiment one of the present invention, and the flow includes the following steps:

In step 401: each of the access network devices A and B is configured with one device certificate.

In step 402: the secure connections are established between the access network devices A and B and their own L-GWs.

In step 403: the mutual authentication based on the certificate is performed between the access network devices by using the IKE, and the authentication succeeds.

In step 404: after the mutual authentication between the access network devices succeeds, the secure connection is established between the access network devices to perform the confidentiality protection or the integrity protection or the confidentiality and integrity protection on the transmitted data.

Referring to FIG. 6, FIG. 6 is a flow chart of the mutual authentication mechanism between the access network devices of embodiment two of the present invention, and the flow includes the following steps:

In step 501: each of the access network devices A and B is configured with one device certificate.

In step 502: the secure connections are established between the access network devices A and B and their own L-GWs.

In step 503: the mutual authentication based on the certificate is performed between the access network devices by using the IKE, and the authentication fails.

In step 504: it is not allowed to transmit the data and/or establish the connection between the access network devices directly.

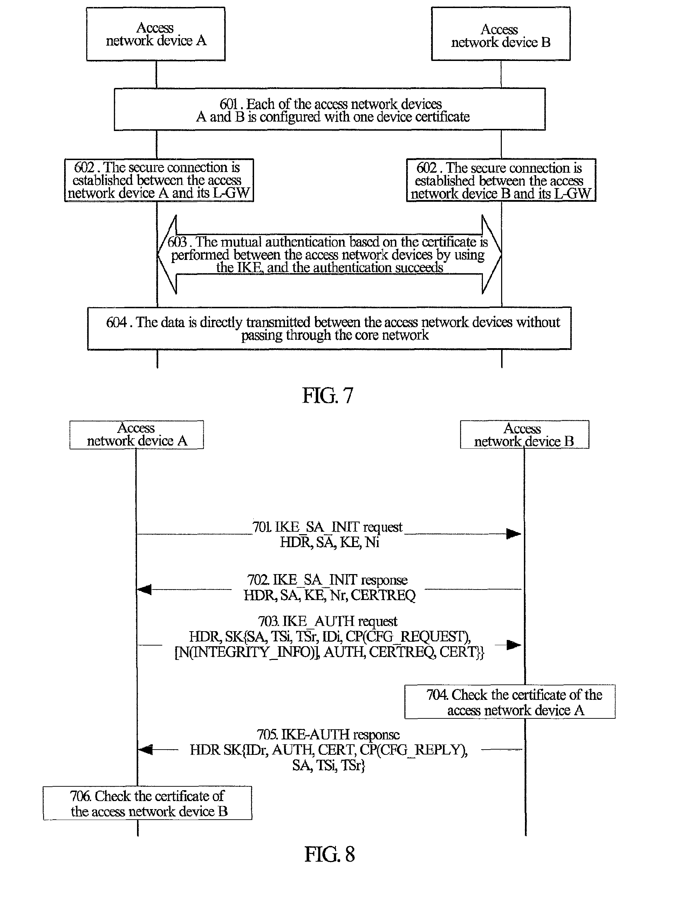

Referring to FIG. 7, FIG. 7 is a flow chart of the mutual authentication mechanism between the access network devices of embodiment three of the present invention, and the flow includes the following steps:

In step 601: each of the access network devices A and B is configured with one device certificate.

In step 602: the secure connections are established between the access network devices A and B and their own L-GWs.

In step 603: the mutual authentication based on the certificate is performed between the access network devices by using the IKE, and the authentication succeeds.

In step 604: the data is directly transmitted between the access network devices without passing through the core network.

Referring to FIG. 8, FIG. 8 is a flow chart of the mutual authentication based on the certificate by using the IKE between the access network devices of embodiment four of the present invention, that is, step 303 includes the following steps:

In step 701: the access network device A sends an IKE_SA_INIT request to the access network device B.

In step 702: the access network device B sends an IKE_SA_INIT response to the access network device A, to request the certificate of the access network device A.

In step 703: the access network device A sends an IKE_AUTH request to the access network device B, which includes the certificate of the access network device A, etc., and requests the certificate of the access network device B.

In step 704: the access network device B checks the certificate of the access network device A.

In step 705: the access network device B sends an IKE_AUTH response to the access network device A, which includes the certificate of the access network device B, etc.

In step 706: the access network device A checks the certificate of the access network device B.

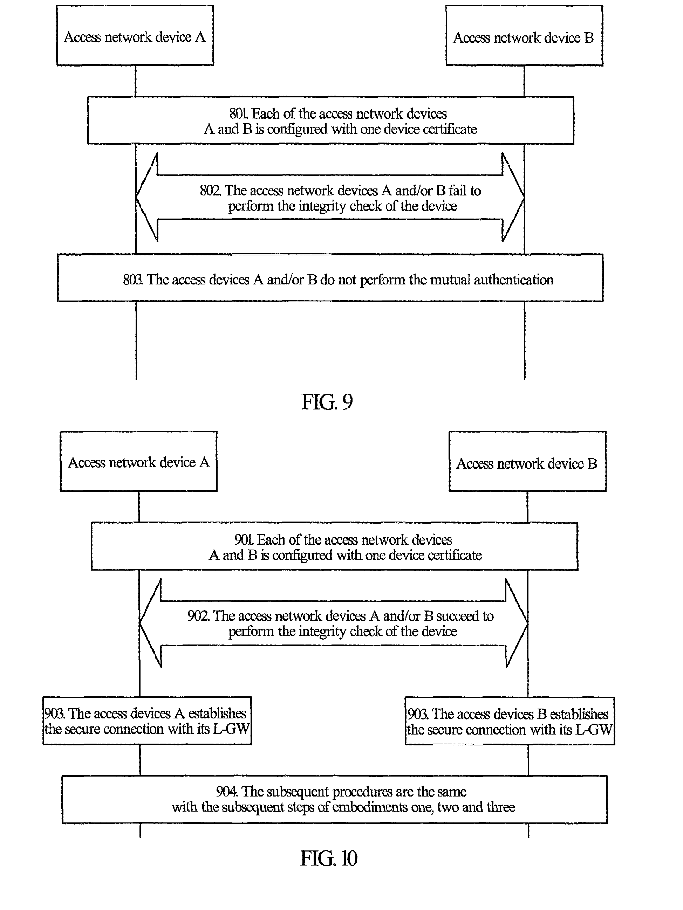

Referring to FIG. 9, FIG. 9 is a flow chart of the mutual authentication mechanism between the access network devices of embodiment five of the present invention, and the flow includes the following steps:

In step 801: each of the access network devices A and B is configured with one device certificate.

In step 802: the access network devices A and/or B fail to perform the integrity check of the device.

In step 803: the access devices A and/or B do not perform the mutual authentication.

Referring to FIG. 10, FIG. 10 is a flow chart of the mutual authentication mechanism between the access network devices of embodiment six of the present invention, and the flow includes the following steps:

In step 901: each of the access network devices A and B is configured with one device certificate.

In step 902: the access network devices A and/or B succeed to perform the integrity check of the device.

In step 903: the access devices A and/or B establish the secure connections with their own L-GWs.

In step 904: the subsequent procedures are the same with the subsequent steps after the secure connection is established in embodiments one, two and three.

The present invention further provides an access network device, configured to: configure a certificate; and perform a mutual authentication based on the certificate with an access network device of an opposite end.

The access network device is further configured to: establish a connection with the access network device of the opposite end, comprising: establishing an insecure connection or a secure connection between the access network device and its local gateway, establishing an insecure connection or a secure connection between the local gateway of the access network device and the local gateway device of the access network device of the opposite end, and establishing an insecure connection or a secure connection between the local gateway of the access network device of the opposite end and the access network device.

The access network device is further configured to: establish the direct secure connection with its local gateway, that is, directly connect with its local gateway through the secure connection; or, establish the indirect secure connection with its local gateway, that is, securely connect with the local gateway of the access network device through other network devices. The secure connection includes an Internet Protocol Security (IPsec) channel and/or a transport layer security (TLS) channel.

The access network device is further configured to: after the mutual authentication with the access network device of the opposite end succeeds, directly transmit data with the access network device of the opposite end or perform a confidentiality protection and/or an integrity protection on the transmitted data through the established secure connection.

The access network device is one or more of a home base station, a home evolved base station, a base station and an evolved base station.

The access network device is further configured to, before performing the mutual authentication based on the certificate with the access network device of the opposite end, perform an integrity check of the device, and perform the mutual authentication with the access network device of the opposite end only when the check is passed.

The present invention further provides a mutual authentication system of an access network device. The system includes an access network device and an access network device of an opposite end, wherein, the access network device and the access network device of the opposite end are configure with certificates; and the mutual authentication is performed between the access network device and the access network device of the opposite end based on the certificate.

The above description is only for the preferred embodiments of the present invention and is not intended to limit the protection scope of the present invention. All of modifications, equivalents and/or variations without departing from the spirit and essence of the present invention should be embodied in the scope of the appending claims of the present invention.

### Industrial Applicability

The present invention realizes the authentication between the access network devices, thus the user data can be directly transmitted.

## Claims

1. A method for a mutual authentication between access network devices, comprising:
configuring a certificate on an access network device; and
performing the mutual authentication based on the certificate between the access network devices.

2. The method according to claim 1, before the step of performing the mutual authentication based on the certificate between the access network devices, further comprising:
establishing a secure connection between the access network device and a local gateway of the access network device, and/or, establishing a secure connection between the local gateways of the access network devices.

3. The method according to claim 2, wherein, the secure connection between the access network device and the local gateway of the access network device refers to that the access network device is directly connected to the local gateway of the access network device through the secure connection; or, the secure connection between the access network device and the local gateway of the access network device refers to that the access network device is securely connected to the local gateway of the access network device through other network devices.

4. The method according to claim 2, wherein, the secure connection comprises an Internet Protocol Security (IPsec) channel and/or a transport layer security (TLS) channel.

5. The method according to any one of claims 1-4, further comprising:
after the mutual authentication between the access network devices succeeds, directly transmitting data between the access network devices or performing a confidentiality protection and/or an integrity protection on the transmitted data through the established secure connection.

6. The method according to any one of claims 1-4, wherein, the access network device comprises one or more of a home base station, a home evolved base station, a base station and an evolved base station.

7. The method according to any one of claims 1-4, before the step of performing the mutual authentication based on the certificate between the access network devices, further comprising: performing an integrity check of the device, and performing the mutual authentication only when the check is passed.

8. An access network device, configured to:
configure a certificate; and perform a mutual authentication based on the certificate with an access network device of an opposite end.

9. The access network device according to claim 8, further configured to:
establish a connection with the access network device of the opposite end, comprising: establishing an insecure connection or a secure connection between the access network device and a local gateway of the access network device, establishing an insecure connection or a secure connection between the local gateway of the access network device and a local gateway device of the access network device of the opposite end, and establishing an insecure connection or a secure connection between the local gateway of the access network device of the opposite end and the access network device.

10. The access network device according to claim 9, wherein, the access network device is configured to establish the insecure connection or the secure connection with the local gateway of the access network device according to a following way: directly connecting to the local gateway of the access network device through the secure connection; or, securely connecting to the local gateway of the access network device through other network devices.

11. The access network device according to claim 9, wherein, the secure connection comprises an Internet Protocol Security (IPsec) channel and/or a transport layer security (TLS) channel.

12. The access network device according to any one of claims 8-11, further configured to: after the mutual authentication between the access network device and the access network device of the opposite end succeeds, directly transmit data with the access network device of the opposite end or perform a confidentiality protection and/or an integrity protection on the transmitted data through the established secure connection.

13. The access network device according to any one of claims 8-11, wherein, the access network device comprises one or more of a home base station, a home evolved base station, a base station and an evolved base station.

14. The access network device according to any one of claims 8-11, further configured to, before performing the mutual authentication based on the certificate with the access network device of the opposite end, perform an integrity check of the device, and perform the mutual authentication with the access network device of the opposite end only when the check is passed.
